# EUROPEAN PATENT APPLICATION

(11) **EP 0 709 702 A1**
(43) Date of publication of application: **01.05.1996**
(21) Application number: 95307539.7
(22) Date of filing: 24.10.1995
(51) Int. Cl.: G02B 6/44

(54) **Improved core configuration for optical fiber cables**

(30) Priority: 31.10.1994 US 332227
(71) Applicant: AT&T Corp., New York, NY 10013-2412 (US)
(72) Inventor: Blyler, Lee Landis, Jr., Basking Ridge, New Jersey 07920 (US); Stix, Marsha S., Tinton Falls, New Jersey 07724 (US)
(74) Representative: Johnston, Kenneth Graham

(57) **Abstract**

A high fiber count optical fiber cable which maintains substantially the same size and weight as conventional cables is achieved, in accordance with the invention, by an optical fiber cable having a centrally located longitudinally extending lightwave core, the lightwave core comprising a plurality of longitudinally extending bundles formed from a polymer material. At least one optical fiber is disposed in at least one of the plurality of polymer bundles. A support shell is disposed around the lightwave core.

In an illustrative example of the invention, six elastomeric polymer bundles each having a substantially circular cross section are concentrically arranged around a seventh such bundle in a "six-around-one" configuration to form a lightwave core. The elastomeric polymer bundles all have substantially identical outside diameters so that the six elastomeric polymer bundles are substantially close packed around the seventh elastomeric polymer bundle. Disposed within at least one of the elastomeric polymer bundles is an arrangement of optical fibers, where the arrangement includes a six-around-one configuration of optical fibers or a plurality of fibers disposed around a central strength member. A support shell comprising a plurality of longitudinally extending steel strength members, conductive jacket, insulator, and plastic jacket, is disposed around the lightwave core. Plastic waterblocking material is disposed in the interstices between the elastomeric bundles, and in the interstices between the strength members and elastomeric bundles.

## Description

### Technical Field

This invention relates to optical fiber cables. More particularly, this invention relates to an optical fiber cable having a high fiber count.

### Background of the Invention

Optical fibers are in widespread use as the information-carrying component of cables deployed in transmission systems because of their large bandwidth capabilities and small size. The large bandwidth, together with the relatively few optical repeaters needed per length of communications cable to implement transmissions systems of significant length, make optical fibers well suited for intercontinental and other submarine applications. Undersea optical fiber cables generally contain relatively few optical fibers, typically six to twelve, due to capacity limitations of the optical repeaters. These existing optical fiber cables, therefore, do not contain a sufficient number of optical fibers to meet the demand for high transmission capacity required, for example, by the evolving short-haul non-repeatered systems used in island and coastal areas. Merely increasing the diameter of existing cable designs as a way of adding optical fibers may be unsatisfactory because of increased cost and weight. The mechanical performance of larger diameter cables can also suffer. For example, pressure resistance and flexibility in bending may decrease due to increased size and cable elongation may increase due to increased weight. Moreover, larger diameter cables can present difficulties in cable handling, problems in cable installation due to size mismatch, and decreased cable production rates.

### Summary of the Invention

A high fiber count optical fiber cable which maintains substantially the same size and weight as conventional cables is achieved, in accordance with the invention, by an optical fiber cable having a centrally located longitudinally extending lightwave core, the lightwave core comprising a plurality of longitudinally extending polymer bundles. At least one optical fiber is disposed in at least one of the plurality of polymer bundles. A support shell is disposed around the lightwave core.

In an illustrative example of the invention, six elastomeric polymer bundles each having a substantially circular cross section are concentrically arranged around a seventh such bundle in a "six-around-one" configuration to form a lightwave core. The elastomeric polymer bundles all have substantially identical outside diameters so that the six elastomeric polymer bundles are substantially close packed around the seventh elastomeric polymer bundle. Disposed within at least one of the elastomeric polymer bundles is an arrangement of optical fibers, where the arrangement includes a six-around-one configuration of optical fibers or a plurality of fibers disposed around an elongated central strength member. A support shell comprising a plurality of longitudinally extending steel strength members, conductive jacket, insulator, and plastic jacket, is disposed around the lightwave core. Plastic waterblocking material is disposed in the interstices between the elastomeric polymer bundles, and in the interstices between the strength members and elastomeric polymer bundles.

### Brief Description of the Drawings

FIG. 1 is a cross sectional view of an illustrative example of a high fiber count optical fiber cable, in accordance with the invention.

FIG. 2 is an enlarged cross sectional view of the lightwave core of the illustrative optical fiber cable shown in FIG. 1.

FIG. 3 is a cross sectional view of another illustrative example of a lightwave core, in accordance with the invention.

FIG. 4 is a cross sectional view of an illustrative encapsulation die, in accordance with the invention.

### Detailed Description

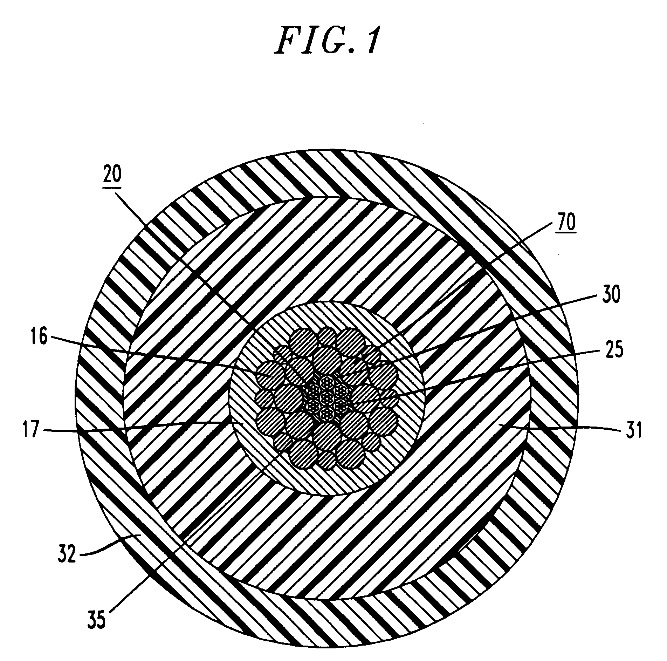

FIG. 1 is a cross sectional view of an illustrative example of a high fiber count optical fiber cable, in accordance with the invention. Optical fiber cable 10 will be described with respect to specific illustrative examples such as overall size, dimensions, and materials used to fabricate a high fiber count optical cable that is particularly useful in non-repeatered submarine applications that comes within the scope of the invention. However, the invention is not limited solely to non-repeatered submarine applications. The described optical fiber cable is useful in any application which requires an optical fiber cable having a high fiber count in a compact and cost effective arrangement.

Optical fiber cable 10 comprises a centrally located lightwave core 20 containing optical fibers and a support shell 70 enclosing the lightwave core 20. Shown in FIG. 1 is one example of a suitable support shell comprising strength members 15 and 16, non-porous conductive jacket 17, insulator 31, and jacket 32. Both conductive jacket 17 and jacket 32 should be considered optional depending upon the particular application of the invention. This particular support shell example is described in United States Patent 4,156,104 by Richard C. Modello, the disclosure of which is incorporated by reference herein. Lightwave core 20 is described in detail below.

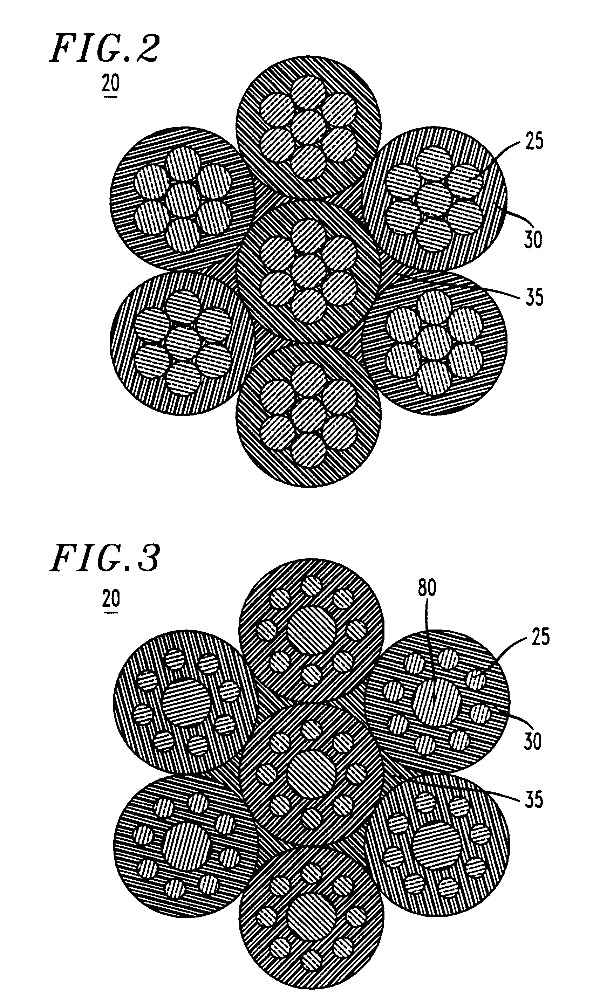

FIG. 2 is an enlarged cross sectional view of the lightwave core 20 of the illustrative optical fiber cable shown in FIG. 1. As shown, lightwave core 20 comprises seven longitudinally extending polymer bundles 30. Disposed within at least one of the polymer bundles 30 is at least one optical fiber. Although bundles 30 may be arbitrarily shaped, they are preferably substantially circular in cross section, and all have substantially uniform diameters. The seven polymers 30 are preferably arranged in a six-around-one configuration where six of the polymer bundles substantially surround the seventh polymer bundle in a single concentric layer. The six polymer bundles may contact each other and the seventh polymer bundles in a substantially close packed manner, as shown in FIG. 2, or have spaces in between. Polymer bundles 30 may be arranged so that the six bundles are helically wound around the seventh, or be arranged in straight parallel paths without helical winding.

Although greater or fewer polymer bundles, other cross-sectional shapes, and other arrangements and configurations of the polymer bundles 30, may used without departing from the spirit and scope of the invention, seven polymer bundles having substantially uniform diameters and circular cross sections, arranged in a six-around-one configuration, as described above, are preferred in order to maximize the packing density of the polymer bundles, and, to provide a stable geometry to the lightwave core 20. Hydrophobic elastomeric water-blocking material 35 may optionally be disposed within the interstices between adjacent polymer bundles 30 as shown in FIG. 2. Such materials are known in the art and include, for example, polyurethane resins. The use of a water-blocking material helps to seal the polymer bundles 30 against the longitudinal propagation of water that could result in the event an immersed cable becomes damaged. Because small microcracks in the glass optical fibers can increase in size through a stress-accelerated chemical reaction between the glass and water known as stress corrosion, it is particularly desirable to utilize water-blocking material 35 in submarine applications of optical fiber cable 10.

Polymer bundles 30 may be formed from thermoplastic polymers, thermosetting polymers, or combinations thereof. Although many different types of polymers may be successfully used in the invention, polymers with elastomeric properties are preferable to provide good cable handling characteristics and the maximum protection to the optical fibers contained within the cable. One example of a suitable thermoplastic elastomer is supplied by DuPont Corporation under the designation "HYTREL." Alternatively, a thermosetting elastomer, for example, one curable using ultraviolet radiation, would also be a suitable material from which to form polymer bundles 30. Conventional cable production equipment may be used to incorporate the polymer bundles 30 forming lightwave core 20 into optical fiber cable 10. For example, the polymer bundles 30 can be payed off from reels and passed through a rosette die. In the preferred six-around-one configuration, the rosette die has a single central hole for one polymer bundle 30 surrounded by six equally spaced holes on the circumference of the die for the other six polymer bundles 30. If it is desirable to arrange the six polymer bundles 30 in a helical lay about the seventh bundle, then the pay off reels and rosette die may be rotated on the production equipment. The polymer bundles 30 exit the rosette die in the six-around-one configuration and are directed to a closing die which closely packs them. Hydrophobic elastomeric waterblocking material 35 optionally wets the polymer bundles 30 at this point. The finished lightwave core 20 is then subjected to a cabling process where the support shell is added to complete the optical fiber cable assembly. One example of a suitable cabling process is described in United States Patent 4,484,963 by Stephen N. Antcil et al., the disclosure of which is incorporated by reference herein.

As noted above, disposed within at least one of the polymer bundles 30 is at least one optical fiber. In this particular illustrative example of the invention, each polymer bundle 30 contains a plurality of optical fibers 25. Optical fibers 25 may be optionally color coded using thin coatings for identification purposes. Although the polymers 30 may quite readily contain a various number of optical fibers in various configurations, it is preferable that seven optical fibers be arranged in a six-around-one configuration as shown in FIG. 2. In the preferred six-around-one configuration, six of the optical fibers 25 substantially surround the seventh optical fiber in a single-layer. The six optical fibers may contact each other and the seventh optical fiber in a substantially close packed manner, as shown in FIG. 2, or have spaces in between. As with the six-around-one configuration of the polymer bundles 30 themselves, the six-around-one configuration of the optical fibers 25 advantageously maximizes their packing density. In this illustrative example, the above described configurations of polymer bundles 30 and optical fibers 25 allow lightwave core 20 to contain 49 optical fibers. If it is desirable in certain applications to have fewer fibers, some of polymer bundles 30 may contain fewer than seven fibers or be fiberless "dummy" polymer bundles. Although not shown in FIG. 2, those skilled in the art will appreciate that other optical fiber configurations may be utilized in the polymer bundles 30, such as single or multiple optical fiber ribbons containing a plurality of optical fibers, random configurations of optical fibers, and combinations thereof.

FIG. 3 is a cross sectional view of another illustrative example of a lightwave core, in accordance with the invention. Lightwave core 20 includes seven polymer bundles 30 as in the above example. In this illustrative example, each bundle 30 contains eight optical fibers 25 which are arranged in a single concentric layer around a central strength member 80. Of course, the choice of eight optical fibers in the illustrated configuration is merely exemplary, as other numbers of optical fibers may be readily accommodated. Central strength member 80 may be, for example, conductive wire, such as steel, or alternatively may be a dielectric material such as glass or polymer, or glass-reinforced polymer. In this illustrative example, the optical fibers 25 are disposed in a equally spaced relationship in each polymer bundle 30, however, other configurations may also be used.

Whichever configuration of optical fibers 25 is utilized, a feature of the invention is that the polymer material forming polymer bundles 30 completely encapsulates optical fibers 25. This feature advantageously provides for an additional measure of resistance against moisture for the optical fibers 25 and helps to buffer the fibers against mechanical stress, shock, and vibration. Another feature of the invention is that the polymer bundles 30 may be conveniently produced as individual components prior to being incorporated into the finished optical fiber cable 10 during the cabling process. This feature provides numerous advantages. It allows great production flexibility with respect to the number of optical fibers that can be placed into an optical cable. Bundles with varying numbers of optical fibers can be kept on hand, yet each bundle, regardless of the number of fibers contained within, is handled the same way during cabling. Another advantage is that the integrity of the lightwave core 20 is improved since each polymer bundle is a discrete unit which is mechanically isolated from other polymer bundles. Thus, for example, a perturbation such as a crack in one polymer bundle is prevented from propagating into adjacent polymer bundles. The elastomeric polymer bundles 30 also advantageously allow for a high count optical fiber cable having a compact lightwave core 20. The compact lightwave core allows for the efficient placement and sizing of strength members when packaged in an optical fiber cable of a given size which gives the cable high tensile strength. The central location of the compact lightwave core further allows the strength members to provide excellent protection to the fragile glass optical fibers against crush, impact, and pressure. In addition, the compact lightwave core provides for an optical fiber cable having substantially the same size and weight as conventional undersea optical fiber cables.

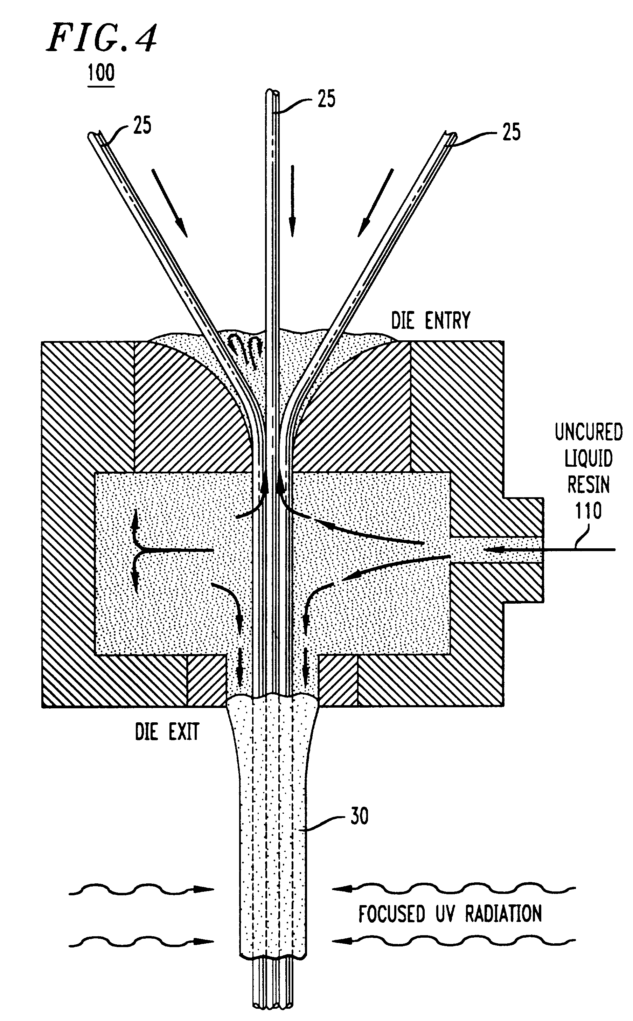

Optical fibers 25 may be encapsulated within polymer bundles 30 by drawing the optical fibers 25 though an encapsulation die during the polymer bundle extrusion process. One example of such an encapsulation die is shown in FIG. 4. For dummy polymer bundles, conventional extrusion processing may be utilized. Die 100 may be fed continuously with liquid resin 110. As discussed above, such a resin may be a thermosetting elastomer which is curable in the presence of ultraviolet radiation. Optical fibers 25 are payed off spools (not shown) as they are continuously pulled through the entry portion of die 100. Optical fibers 25 are guided by guides and sheaves (not shown) to the entry of die 100 so that a central optical fiber is aligned with the center of the die entry and the remaining six fibers are in close alignment in the six-around-one configuration described above. For the purposes of clarity in illustration, only three exemplary fibers are shown. At the entry to die 100, the optical fibers 25 are wetted by an upward flow of liquid resin. The upward flow results from an upward pressure gradient from internal pressure of the liquid resin within die 100. The upward pressure gradient also helps to prevent entrained air from entering die 100 with the fibers. The entry portion of die 100 is substantially cone shaped to guide optical fibers 25 into the close packed configuration. The exit portion of die 100 is cylindrically shaped with a diameter chosen to provide the desired diameter of the polymer bundles 30. The curing of the resin using ultraviolet radiation is then accomplished using conventional techniques. The finished polymer bundle 30 with encapsulated optical fibers 25 may be wound up on a take up spool (not shown) positioned in proximity to the exit of die 100.

Without in any way affecting the generality of the foregoing description, Table 1 below presents typical sizes of the various elements of optical fiber cable 10.

**TABLE 1**

| | |
|---|---|
| Diameter of polymer bundle | |
| with central strength member | 0.056 in. |
| without central strength member | 0.039 in. |
| Outer diameter of lightwave core | |
| with central strength member | 0.155 in. |
| without central strength member | 0.117 in. |
| Outer diameter of optical fiber cable | 1.00 in. |

## Claims

1. A optical fiber cable, comprising:
a longitudinally extending lightwave core being centrally located within said optical fiber cable, said longitudinally lightwave core including
a plurality of longitudinally extending polymer bundles,
at least one optical fiber encapsulated in at least one of said plurality of longitudinally extending polymer bundles; and
a longitudinally extending support shell enclosing said longitudinally extending lightwave core.

2. The optical fiber cable as claimed in claim 1 wherein said plurality of longitudinally extending polymer bundles are formed from a material selected from the group consisting of thermosetting polymers, thermoplastic polymers, or combinations thereof.

3. The optical fiber cable as claimed in claim 2 wherein said material has elastomeric properties.

4. The optical fiber cable as claimed in claim 1 wherein at least one of said longitudinally extending polymer bundles is substantially circular in cross section.

5. The optical fiber cable as claimed in claim 1 wherein said plurality of longitudinally extending polymer bundles have substantially uniform diameters.

6. The optical fiber cable as claimed in claim 1 wherein said plurality of longitudinally extending polymer bundles are arranged in a substantially close packed configuration.

7. The optical fiber cable as claimed in claim 6 further including a water blocking material disposed in interstices between adjacent ones of said plurality of longitudinally extending polymer bundles.

8. The optical fiber cable as claimed in claim 1 wherein said at least one optical fiber is disposed within said at least one of said plurality of longitudinally extending polymer bundles in a configuration selected from the group consisting of random or ribbons.

9. The optical fiber cable as claimed in claim 1 wherein predetermined ones of said plurality of longitudinally extending polymer bundles are arranged to substantially surround a predetermined one of said plurality of longitudinally extending polymer bundles.

10. The optical fiber cable as claimed in claim 9 wherein said predetermined ones of said plurality of longitudinally extending polymer bundles are helically wound around said predetermined one of said plurality of longitudinally extending polymer bundles.

11. The optical fiber cable as claimed in claim 1 further including a plurality of longitudinally extending strength members disposed around said lightwave core.

12. The optical fiber cable of claim 11 wherein said plurality longitudinally extending strength members are cylindrically-shaped.

13. The optical fiber cable as claimed in claim 11 wherein said plurality of longitudinally extending strength members comprises a material selected from the group consisting of steel, polymer, glass-reinforced polymer, or combinations thereof.

14. The optical fiber cable of claim 11 wherein said plurality of longitudinally extending strength members are wound in a helical lay about said longitudinally extending lightwave core.

15. The optical fiber cable of claim 1 further including a water-blocking material disposed in interstices between said plurality of longitudinally extending strength members and said longitudinally extending lightwave core.

16. The optical fiber cable of claim 11 wherein each of said plurality of cylindrically-shaped longitudinally extending strength members comprises galvanized improved plow steel.

17. The optical fiber cable as claimed in claim 1 further including a first annular jacket disposed around said plurality of longitudinally extending strength members.

18. The optical fiber cable as claimed in claim 17 wherein said first annular jacket comprises a material selected from the group consisting of low-density polyethylene, medium-density polyethylene, or high-density polyethylene.

19. The optical fiber cable as claimed in claim 18 further including a second annular jacket disposed around and in contact with said first annular jacket.

20. The optical fiber cable as claimed in claim 19 wherein said second annular jacket comprises a material selected from the group consisting of low-density polyethylene, medium-density polyethylene, or high-density polyethylene.

21. The optical fiber cable as claimed in claim 11 wherein said longitudinally extending strength members comprise wires distributed in first and second substantially concentric layers around said longitudinally extending lightwave core.

22. The optical fiber cable as claimed in claim 17 further including a non-porous moisture-proof conductive tube disposed around said plurality of strength members.

23. A method for producing an optical fiber cable, comprising the steps of:
encapsulating at least one optical fiber in at least one of a plurality of longitudinally extending polymer bundles;
collecting said plurality of longitudinally extending bundles into a lightwave core; and
subjecting said lightwave core to a cabling process.

24. The method as claimed in claim 23 wherein said cabling process further includes the steps of:
coating said lightwave core with an adhesive;
winding at least one layer of steel wires over said adhesive on said lightwave core;
forming a conductive tube over said layer of steel wires; and
swaging said conductive tube down onto said layer of steel wires.

25. The method as claimed in claim 24 wherein
an outer surface of said lightwave core is a nylon material, the nylon material being coated with a hot melt adhesive; and
said hot melt adhesive being applied to said lightwave core at a temperature in a range of 220°-240° Centigrade.

26. A method as claimed in claim 24 wherein said adhesive is wiped on said lightwave core at a uniform thickness which provides enough adhesive to almost fill interstices between said layer of steel wires and said surface of said lightwave core.

27. A method as claimed in claim 25 wherein said adhesive is wiped on said lightwave core at a uniform thickness which provides enough adhesive to almost fill interstices between said layer of steel wires and said surface of said lightwave core.

28. A method as claimed in claim 27 wherein said adhesive hardens and tightly bonds said lightwave core to said layer of steel wires for preventing creep therebetween.

29. A method as claimed in claim 24 wherein an outer surface of said lightwave core is a polyamide material, said polyamide material is coated with a hot melt adhesive, and said adhesive is applied to said lightwave core at a temperature in a range of 220°-240° Centigrade.

30. A method as claimed in claim 29 wherein said adhesive is wiped on said lightwave core at a uniform thickness which provides enough adhesive to partially fill interstices between said layer of steel wires and said surface of said lightwave core.

31. A method for as claimed in claim 30 wherein said adhesive hardens and tightly bonds said lightwave core to said layer of steel wires to prevent creep therebetween.

32. A method as claimed in claim 24 further comprising the steps of:
coating, with nylon, said lightwave core;
coating, with a hot melt adhesive, said lightwave core, the adhesive being applied to said lightwave core at a temperature in a range of 220°-240° Centigrade:
winding at least one layer of steel wires over said adhesive on said lightwave core;
forming a conducting tube over said layer of steel wires; and
swaging said tube down onto said layers of steel wires.
